# EUROPÄISCHE PATENTSCHRIFT

(11) **EP 1 084 090 B1**
(45) Veröffentlichungstag und Bekanntmachung des Hinweises auf die Patenterteilung: **19.01.2005**
(21) Anmeldenummer: 99919199.2
(22) Anmeldetag: 06.04.1999
(51) Int. Cl.: C04B 38/08

(54) **FORMSTABILES, DURCHSTRÖMUNGSPORÖSES FILTERELEMENT, INSBESONDERE HEISSFLUID-FILTERELEMENT**
DIMENSIONALLY STABLE, CROSS-FLOW PERMEABLE FILTER ELEMENT, ESPECIALLY A HOT LIQUID FILTER ELEMENT
ELEMENT FILTRANT, DE FORME STABLE ET POREUX A L'ECOULEMENT, NOTAMMENT ELEMENT FILTRANT DESTINE A UN FLUIDE CHAUD

(30) Priorität: 06.04.1998 DE 19815377
(43) Veröffentlichungstag der Anmeldung: 21.03.2001
(73) Patentinhaber: Herding GmbH Filtertechnik, 92224 Amberg (DE)
(72) Erfinder: HERDING, Walter, D-92256 Hahnbach (DE); BURGER, Hans, Joachim, D-93133 Burglengenfeld (DE)
(74) Vertreter: Klunker . Schmitt-Nilson . Hirsch
(86) Internationale Anmeldenummer: PCT/EP1999/002326
(87) Internationale Veröffentlichungsnummer: WO 1999/051543

(56) Entgegenhaltungen:
- AT-B- 327 080
- DE-A- 2 157 371
- DE-A- 2 841 624
- DE-A- 3 246 502
- DE-A- 19 701 858
- DE-A- 19 712 835
- US-A- 5 679 452
- CHEMICAL ABSTRACTS, vol. 109, no. 26, 26. Dezember 1988 (1988-12-26) Columbus, Ohio, US; abstract no. 235847, KOSHIISHI, KAZUMARO: "Inorganic thermal insulator" Seite 308; XP000055302 & JP 63 151691 A (SHINNIKKEI CO., LTD.)

## Beschreibung

Gegenstand der Erfindung ist ein formstabiles, durchströmungsporöses Filterelement, das für das Filtern von Heißfluid geeignet ist, wobei das Filterelement einen formstabilen durchströmungsporösen Formkörper enthält, der folgende Komponenten aufweist:
- anorganische Feststoffteilchen mit inneren Leerräumen, und
- gehärteten Binder auf Wasserglasbasis,
- wobei der Binder die Feststoffteilchen zu dem durchströmungsporösen Formkörper zusammenhält,
dadurch gekennzeichnet, dass Blähtonteilchen als anorganische Feststoffteilchen mit inneren Leerräumen vorgesehen sind; dass der Formkörper als weitere Komponente Talkum als Mittel zum Erhöhen der Geschmeidigkeit der Masse für den rohen Formkörper enthält; und dass an der Zuströmoberfläche des Filterelements eine Oberflächenfiltrationsschicht vorgesehen ist, die eine kleinere Porengröße als das Filterelement unterhalb der Oberflächenfiltrationsschicht hat.

Ein Filterelement mit den Merkmalen, die im vorhergehenden Absatz vor den Worten "dadurch gekennzeichnet" stehen, ist aus dem Dokument US 5 679 452 A bekannt. Bei diesem bekannten Filterelement bestehen die "anorganischen Feststoffteilchen mit inneren Leerräumen" aus 50 bis 60 % SiO₂-Komponenten, 37 bis 47 % Al₂O₃-Komponenten, höchstens 3 % anderen Komponenten, und müssen perfekt kugelförmig sein ("of an absolute sphere"). Ferner werden bestimmte Größenklassen von Feststoffteilchen in derartigem Verhältnis zusammengemischt, daß sich eine Schüttdichte im Bereich von 0,3 bis 0,5 g/cm³ ergibt. Als Ergebnis hat die "geformte Platte aus expandierter Keramik" eine besonders hohe Festigkeit, eine besonders niedrige Wärmeleitfähigkeit und ein besonders niedriges spezifisches Gewicht. Entsprechend diesen Eigenschaften steht bei der Platte gemäß US 5 679 452 A der Einsatz als Platte im Baubereich, insbesondere Außenwandverkleidung, Bodenplatte, Deckenplatte, Dachplatte, Schallschutzplatte, absolut im Vordergrund. Die Verwendung als Filter ist ganz am Rande erwähnt. Gemäß US 5 679 452 A ist bei dem Wasserglas-Binder stets ein Härter vorgesehen, nämlich "phosphate salt glass powder" oder Portlandzement.

Ein Filterelement, das an seiner Zuströmoberfläche eine Oberflächenfiltrationsschicht mit einer kleineren Porengröße als das Filterelement unterhalb der Oberflächenfiltrationsschicht hat, ist aus EP 0 345 491 A bekannt.

Allgemein gesprochen und nicht notwendigerweise auf die US 5 679 452 A bezogen, zeichnet sich das erfindungsgemäße Filterelement durch eine Kombination hervorragender Eigenschaften aus:
- Es können relativ preiswerte Ausgangsmaterialien eingesetzt werden;
- die Herstellung ist einfach und preisgünstig;
- das Filterelement hat, bezogen auf sein Volumen, ein niedriges Gewicht, was den Aufwand für eingesetztes Rohmaterial verringert und den technischen Aufwand für eine ggf. vorzusehende Tragstruktur für das Filterelement verringert;
- das Filterelement ist für die Behandlung von Fluiden, die sich auf erhöhter Temperatur befinden, geeignet.

Bei den erfindungsgemäß eingesetzten Blähtonteilchen können die inneren Leerräume alle oder teilweise eine Verbindung zur Umgebung des betreffenden Blähtonteilchens haben.

Vorzugsweise sind Feststoffteilchen vorgesehen, die zum größten Teil eine Größe in den Grenzen 0,2 bis 1 mm, vorzugsweise 0,3 bis 0,7 mm, haben. Die Wahl der Teilchengröße bestimmt die Porengröße in dem Filterelement. "Zum größten Teil" bedeutet "zu mehr als 50% des Volumens oder Gewichts der Feststoffteilchen", vorzugsweise "zu mehr als 90%". Wenn man jedoch z. B. ein Filterelement mit sehr großer Porosität zwischen den Feststoffteilchen wünscht, kann man auch Feststoffteilchen größerer Größe einsetzen. Insbesondere bei Formkörpern als Katalysatorträger in Abgasanlagen sind Teilchen in der Größe 1,0 bis 2,0 mm als günstig bevorzugt.

Vorzugsweise ist der Binder Natronwasserglas, Kaliumwasserglas, Lithiumwasserglas oder eine Mischung aus mindestens zwei der genannten Wassergläser. Besonders handelsüblich ist ein Gemisch aus Natronwasserglas und Kaliumwasserglas.

Zum Härten des Wasserglasbasis-Binders können die für derartige Binder gängigen Methoden eingesetzt werden, insbesondere Begasen mit CO₂, Förderung der CO₂-Aufnahme aus der Luft durch Erwärmen, Langzeiterhärtung bei Raumtemperatur an der Luft, Zumischen eines Metalloxids zu dem Wasserglas, Zumischen einer Säure zu dem Wasserglas, Zumischen eines Esters zu dem Wasserglas. Besonders bevorzugt ist jedoch ein ganz neuartiger Weg der Härtung, nämlich indem der rohe Formkörper (d. h. der noch nicht gehärtete Formkörper) mit einer Härtungsflüssigkeit auf Alkoholbasis kontaktiert wird. Vorzugsweise besteht die Härtungsflüssigkeit zu einem erheblichen Teil aus Alkohol, wobei als konkrete Grenzen vorzugsweise mindestens 30% Alkohol, stärker bevorzugt minestens 40% Alkohol, noch stärker bevorzugt mindestens 50% Alkohol, noch stärker bevorzugt mindestens 70% Alkohol, noch stärker bevorzugt ca. 100% Alkohol (wie handelsüblich erhältlich). Vorzugsweise ist der für den Härtungsvorgang verantwortliche Bestandteil ein einwertiger Alkohol oder auch eine Mischung mehrerer einwertiger Alkohole. Besonders brauchbare und leicht und kostengünstig erhältliche Alkohole sind Äthanol, Methanol, Isopropanol, Brennspiritus (= vergällter Äthanol). Wegen der porösen Struktur des rohen Formkörpers ist es vom technischen Ablauf her einfach, den Binder auf Wasserglasbasis in dem gesamten rohen Formkörper im erforderlichen Ausmaß dem gesamten rohen Formkörper im erforderlichen Ausmaß mit der Härtungsflüssigkeit zu kontaktieren. Es hat sich überraschend gezeigt, daß dieses Kontaktieren zu einer spontanen, in sehr kurzer Zeit (im wesentlichen schon in wenigen Sekunden) ablaufenden Härtung des Binders führt. Es ist ein für die Produktion immenser Vorteil, daß der Formkörper ohne den Einsatz eines Erwärmungsschritts und ohne den Einsatz einer längeren Härtungszeit von dem rohen, ungehärteten Zustand in den gehärteten Zustand gebracht werden kann. Da mit der Härtungsflüssigkeit auf Alkoholbasis der Härtungsvorgang sehr rasch abläuft, handelt es sich wohl nicht um eine chemische Reaktion mit dem Binder, vielmehr scheint ein physikalischer Vorgang vorzuliegen, der wahrscheinlich Wasserentzug aus dem Binder als wichtigen Effekt aufweist.

Zu den bisher genannten Hauptkomponenten des Formkörpers (Feststoffteilchen mit inneren Leerräumen und gehärteter Binder auf Wasserglasbasis) müssen in der Regel keine weiteren Komponenten hinzutreten, um den grundsätzlichen Aufbau des Formkörpers zu schaffen. Es wird allerdings darauf hingewiesen, daß es insbesondere in den Fällen, in denen relativ hohe Festigkeit des Filterelements gefordert wird, das Vorsehen einer Festigungskomponente, vorzugsweise in Form eines Fasergeleges, als günstig bevorzugt sein kann. Das Fasergelege kann insbesondere an einer Oberfläche des Filterelements vorgesehen sein, aber auch als inneres Fasergelege. Es können Fasergelege üblicher Ausbildung eingesetzt werden, insbesondere Gewebematten. Als Materialien kommen die üblichen Fasern in Betracht, insbesondere Glasfasern, aber auch Kohlefasern, Mineralfasern und andere.

Außer den bisher angesprochenen Komponenten kann die Masse, aus der der rohe Formkörper besteht, noch weitere Komponenten in untergeordneter Menge enthalten, vorzugsweise ausgewählt aus der folgenden Gruppe, und zwar entweder eine Komponente aus einer Gruppe oder mehrere Komponenten aus einer Gruppe oder mehrere Komponenten aus mehreren Gruppen:
- einen oder mehrere Füllstoffe (neben dem Talkum), vorzugsweise Quarzmehl;
- einen oder mehrere Hilfsstoffe oder Additive;
- Fasern zur Festigkeitserhöhung, vorzugsweise Glasfasern, aber auch andere Fasern wie im vorstehenden Absatz ausgeführt.

Die Füllstoffe können die Geschmeidigkeit der Masse für den rohen Formkörper erhöhen und so die Verarbeitbarkeit dieser Masse verbessern. Außerdem erhöht sich die Festigkeit und verringert sich die Schwindung bei der Härtung vom rohen Formkörper zum fertig geformten Formkörper. Die genannten Fasern werden normalerweise dem Binder hinzugemischt und liegen in der zu formenden Masse ungeordnet vor. Hier liegt der Unterschied zu den weiter vom angesprochenen Fasergelegen. Von den genannten, ergänzenden Komponenten zu unterscheiden sind Komponenten, die gewünschtenfalls dem Formkörper nach der Härtung hinzugefügt werden, z. B. bestimmte Oberflächenschichten, Imprägnierungen und dergleichen.

Vorzugsweise weist die Masse, aus welcher der rohe Formkörper geformt werden soll, bezogen auf das Gesamtgewicht die folgenden Gewichtsprozent-Bereiche auf:

| | |
|---|---|
| 10 - 50 % | Wasserglas |
| 0 - 5% | Füllstoff oder Füllstoffe |
| 0 - 5% | Hilfsstoffe oder Additive |
| 0 - 5% | Fasern |
| 35 - 90% | Feststoffteilchen mit inneren Leerräumen (als Rest). |

Bei dem Wasserglas bezieht sich der angegebene Gewichtsprozent-Bereich auf handelsübliches Wasserglas, das üblicherweise einen Feststoffgehalt in der Gegend von 50%, auch etwas darunter, Rest Wasser hat. Ferner wird darauf hingewiesen, daß viele Füllstoffe, insbesondere auch das bereits genannte Talkum oder das bereits genannte Quarzmehl, viele Hilfsstoffe und/oder Additive, und auch in die Masse verteilt eingebrachte Fasern spezifisch sehr leicht sind; trotz der angegebenen, niedrigen Gewichtsprozent-Bereiche dieser Komponenten können diese Komponenten jeweils einen deutlich höheren Anteil des Volumens der zu formenden Rohmasse ausmachen. Schließlich wird darauf hingewiesen, daß bei dem Bezugsgewicht von 100% der zu formenden Masse ein etwaiges Fasergelege - zur Festigkeitserhöhung nicht einbezogen war.

Für das erfindungsgemäße Filterelement gibt es eine fülle technischer Einsatz- und Verwendungsmöglichkeiten. Einige dieser Möglichkeiten seien als besonders bevorzugt genannt und herausgestellt:
- Filterelement für Gase oder Flüssigkeiten;
- Filterelement für die Rauchgase von Verbrennungsanlagen;
- Partikelfilter für Abgasanlagen von Dieselmotoren;
- Basiskörper mit katalytischer Beschichtung für katalytische Abgasentgiftungsaniägen (z. B. solche, wie man sie aus dem Abgastrakt von Kraftfahrzeugen kennt).

Wiewohl das erfindungsgemäße Filterelement aufgrund seiner Ausbildung ein bei erhöhter Temperatur einsetzbares technisches Element ist, kann man es selbstverständlich auch bei der Filtration bei nicht-erhöhten Temperaturen einsetzen. Der erfindungsgemäße Aufbau des Filterelements mit Feststoffteilchen in Form von Blähtonteilchen, stellt die Einsatzfähigkeit bei einer Dauerbetriebstemperatur von über 200°C sicher, aber auch noch sehr viel höhere Dauerbetriebstemperaturen stellen kein grundsätzliches Problem dar. Ganz besonders sei auf die Möglichkeit der Filtration oder der katalytischen Behandlung von Verbrennungsabgasen im Temperaturbereich von 200 bis 950°C hingewiesen.

Filterelemente mit Oberflächenfiltrationsschicht haben insbesondere die Vorteile, daß sich das Filterelement durch Rückströmen gut abreinigen läßt und daß sich die Poren im Inneren des Filterelements nicht zusetzen, was den Durchströmungswiderstand des Filterelements auf die Dauer immer weiter erhöhen würde. Besonders bevorzugt ist eine Oberflächenfiltrationsschicht aus Fasern, vorzugsweise Glasfasern oder Mineralfasern, oder aus anorganischen Feststoffteilchen.

Der Formkörper für das erfindungsgemäße Filterelement läßt sich nach einem Verfahren herstellen, das dadurch gekennzeichnet ist,
(a) daß die Komponenten für den rohen Formkörper zu einer bildsamen oder fließfähigen Masse vermischt werden;
(b) daß die Masse in eine Form eingebracht wird;
(c) daß der Forminhalt gehärtet wird, vorzugsweise durch Zuführen einer Härtungsflüssigkeit auf Alkoholbasis in einer derartigen Menge, daß der Binder mindestens nahezu vollständig von der Härtungsflüssigkeit kontaktiert wird;
(d) und daß der gehärtete Formkörper aus der Form entnommen wird.

Obwohl das Kontaktieren mit der Härtungsflüssigkeit zu einer so weitgehenden, spontanen Härtung des Formkörpers führt, daß er der Form entnommen werden kann und eine gute Anfangsformstabilität hat, schließt sich häufig eine abschließende Austrocknung und Nachhärtung an, insbesondere bei Raumtemperatur oder bei erhöhter Temperatur von vorzugsweise 100 bis 150°C. Die Härtung des Binders mit der genannten Härtungsflüssigkeit erlaubt es, den Formkörper nach kurzer Zeit, vorzugsweise nach weniger als 60s, höchst vorzugsweise nach weniger als 30s, der Form zu entnehmen. Es ist günstig, aus dem Formkörper entweder vor Entnahme aus der Form oder nach Entnahme aus der Form überschüssige Härtungsflüssigkeit zu entfernen, z. B. durch Abtropfenlassen, Abschleudern, Durchblasen, Durchsaugen, Verdunstenlassen.

Die Form, in der der Formkörper hergestellt wird, kann eine sehr einfache Gestalt (z. B. quaderförmig für die Herstellung von plattenartigen Produkten) haben, aber auch eine kompliziertere Gestalt. Die Form kann vorzugsweise auch Formkerne enthalten, so daß ein Formkörper mit mindestens einem Innenhohlraum hergestellt wird, der nach außen abgeschlossen ist oder eine Verbindung nach außen hat. in den meisten Fällen ist es günstig, eine einfach geteilte oder auch eine mehrfach geteilte Form vorzusehen. Je nach Konsistenz der Formmasse kann man mit Einfließen in die Form, aber auch Einbringen mit anschließender Aufbringung eines gewissen Verdichtungsdrucks, oder auch Einbringen und Unterstützen der Füllung der Form durch Vibrieren oder dergleichen arbeiten.

Die Erfindung wird nachfolgend anhand von Ausführungsbeispielen noch näher erläutert:
- Fig. 1: zeigt eine Draufsicht auf eine erste Herstellungsform;
- Fig. 2: zeigt in einem horizontalen Querschnitt einen Formkörper nach Entnahme aus der ersten Herstellungsform;
- Fig. 3: zeigt eine Draufsicht auf eine zweite Herstellungsform;
- Fig. 4: zeigt eine Draufsicht auf eine dritte Herstellungsform;
- Fig. 5: zeigt einen vertikalen Querschnitt durch eine "liegende", vierte Herstellungsform;
- Fig. 6: zeigt im Schnitt ein vergrößertes Detail eines Fluidbehandlungselements an der Stelle A in Fig. 5, hergestellt in der vierten Herstellungsform.

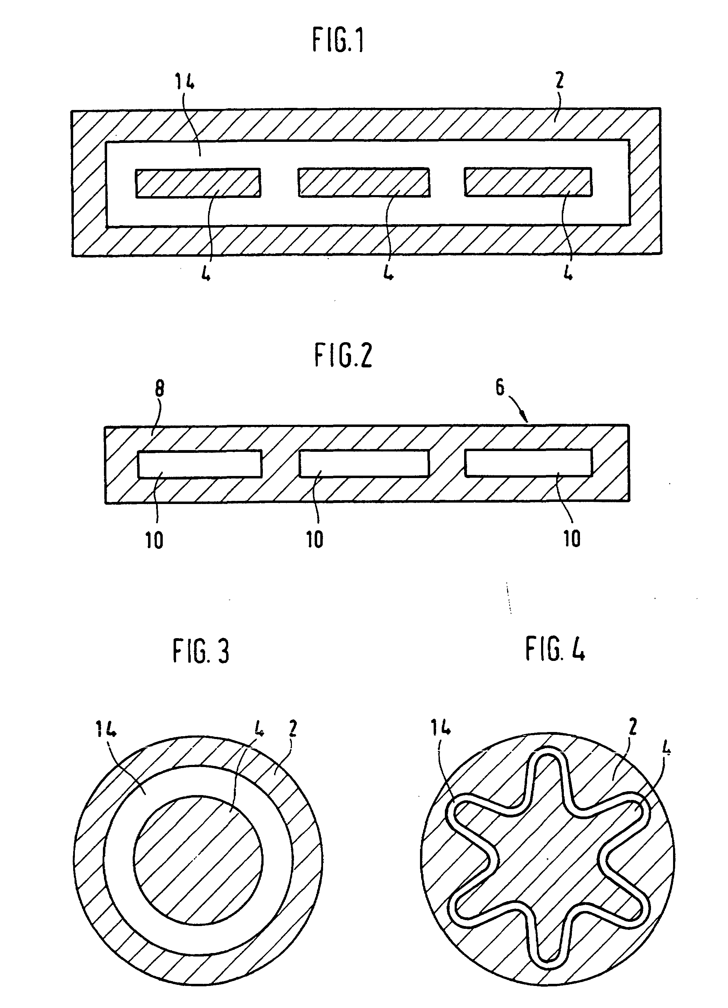

Die in Fig. 1 dargestellte, erste Herstellungsform 2 hat die Gestalt eines relativ flachen, innen hohlen Quaders, der an fünf Seiten geschlossen ist und an der sechsten Seite offen ist. Von der offenen Seite her sind drei Formkerne 4, die voneinander beabstandet sind und jeweils rechteckigen Querschnitt haben, eingesetzt; die Formkerne 4 sieht man in Fig. 1 im Schnitt, weil sie nach oben aus der offenen Form herausragen.

In Fig. 2 ist der in der ersten Herstellungsform gemäß Fig. 1 hergestellte Formkörper 6 nach Entnahme aus der Herstellungsform 2 dargestellt. Es läßt sich insbesondere so einsetzen, daß die Außenoberfläche 8 die Zuströmoberfiäche des Filterelements 6 darstellt, während das Reingas oder die Reinflüssigkeit aus den Kammern 10 nach oben abgezogen wird.

Die in Fig. 3 dargestellte, zweite Herstellungsform 2 hat einen zylindrischen Formhohlraum, in dem ein zylindrischer Kern 4 kleineren Durchmessers angeordnet ist. Somit läßt sich in der Herstellungsform 2 ein Formkörper herstellen, der die Gestalt eines Rohrabschnitts hat.

Die in Fig. 4 dargestellte, dritte Herstellungsform 2 hat einen Formhohlraum, der in Abwandlung des Formhohlraums der zweiten Herstellungsform gewellt-zylindrisch ist. Der Kern 4 hat eine Außenkontur, die dieser Wellung beabstandet folgt. Mit der dritten Herstellungsform läßt sich somit ein Formkörper herstellen, der die Gestalt eines Wellrohrabschnitts hat.

Es wird darauf hingewiesen, daß die erste, die zweite und die dritte Herstellungsform 2 entweder so vorgesehen sein können, daß sich die Kerne 4 in der Herstellungsform 2 bis zu deren unterem Abschluß erstrecken; dann ist der innere Hohlraum der hergestellten Formkörper 6 am unteren Ende und am oberen Ende offen. Alternativ kann man die Kerne 4 mit ihrem unteren Stirnende mit Abstand vom unteren Abschluß des Formhohlraums anordnen; dann werden Formkörper 6 erzeugt, deren Hohlräume unten abgeschlossen sind und nur nach oben hin offen sind.

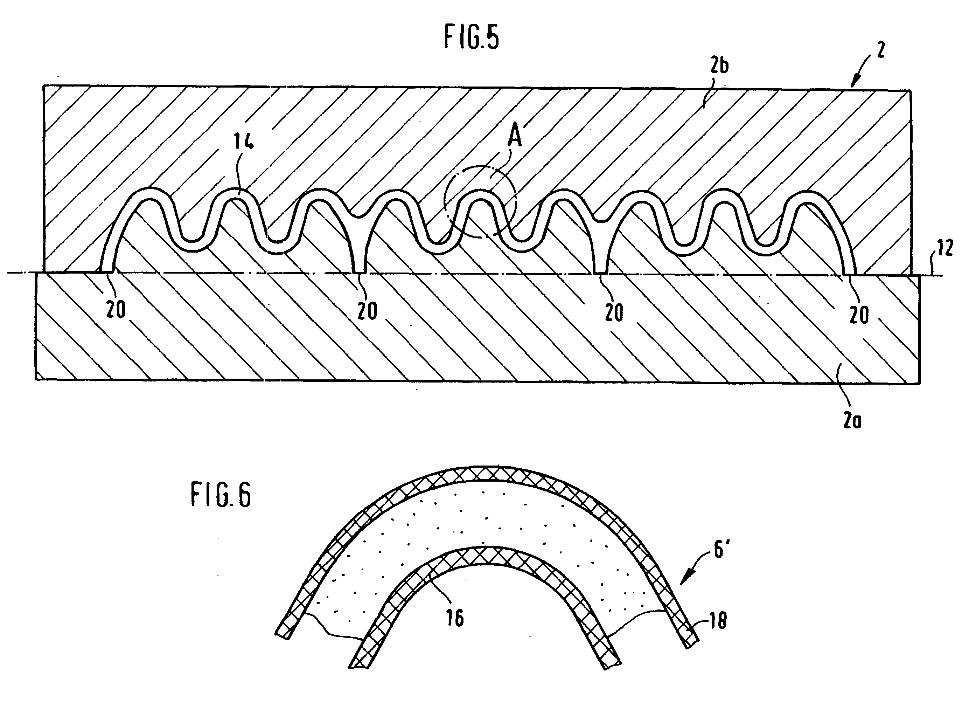

In Fig. 5 ist eine vierte Herstellungsform 2 mit etwas komplizierterer geometrischer Gestalt dargestellt. Es gibt eine "liegende", untere Formhälfte 2a, die eine Abfolge parallel verlaufender "Wellenberge" und "Wellentäler" hat. Eine "liegende", obere Formhälfte 2b ist an ihrer unteren Seite analog mit Wellenbergen und Wellentälern profiliert. Wenn die untere Formhälfte 2a und die obere Formhälfte 2b an der Formteilungshälfte 12 zusammengesetzt sind, wie in Fig. 5 gezeigt, begrenzen sie einen Formhohlraum 14. der wie ein dickes Wellblech gestaltet ist.

Zur Herstellung einer Fluidbehandlungselement-Hälfte 6' wird bei geöffneter Herstellungsform 2 eine dosierte Menge an aus den Komponenten gemischter Masse in die untere Formhälfte 2a eingefüllt. Dann wird die obere Formhälfte 2b in Richtung auf die untere Formhälfte 2a abgesenkt und so stark angepreßt, daß ein Verdichtungsdruck auf den Forminhalt ausgeübt wird.

Wenn zur Festigkeitssteigerung der Formkörper Hälfte 6' gewünscht, kann vor dem Einbringen der Masse in die untere Formhälfte 2a ein Fasergelege, insbesondere eine Glasfasergewebematte, eingelegt werden, alternativ auch erst ein Teil der Masse in die untere Formhälfte 2a eingefüllt und dann das Fasergelege aufgelegt werden.

In Fig. 6 ist in vergrößerter Darstellung veranschaulicht, wie die Formkörper-Hälfte 6' im Detail aussieht. Der poröse Aufbau aus anorganischen Feststoffteilchen mit inneren Leerräumen, die durch gehärteten Binder auf Wasserglasbasis zusammengehalten sind, ist durch Punktierung angedeutet. Das Fasergelege 16 im Bereich einer Oberfläche der Fluidbehandlungselement-Hälfte 6' ist mit doppelter Schraffur angedeutet. Außerdem ist veranschaulicht, daß man auf der Außenseite der Formkörper-Hälfte 6' anschließend eine Oberflächenfiltrationsschicht 18, angedeutet durch doppelte Schraffur, aufbringen kann.

Wenn man sich eine zweite Formkörper-Hälfte 6" spiegelbildlich von unten her gegen die in der Herstellungsform 2 von Fig. 5 hergestellte, erste Formkörper-Hälfte 6' angesetzt und an den Stellen 20 mit ihr verbunden denkt (vorzugsweise mit Hilfe von Wasserglas-Binder), hat man wiederum einen, grob gesprochen, gewellt-flachquaderförmigen Formköper mit Hohlräumen vor sich. Man kann wiederum entweder so arbeiten, daß die Hohlräume jeweils an ihren zwei Enden offen sind. Alternativ kann die vierte Herstellungsform 2 an einer Seite so gestaltet sein, daß die Hohlräume einseitig geschlossen sind; dann hat man einen gewellt-flachquaderförmigen Formkörper 6 vor sich, der an fünf Seiten geschlossen und an der sechsten Seite zu den Hohlräumen offen ist.

## Patentansprüche

1. Formstabiles, durchströmungsporöses Filterelement, das für das Filtern von Heißfluid geeignet ist,
wobei das Filterelement einen formstabilen durchströmungsporösen Formkörper (86) enthält, der folgende Komponenten aufweist:
- anorganische Feststoffteilchen mit inneren Leerräumen, und
- gehärteten Binder auf Wasserglasbasis,
- wobei der Binder die Feststoffteilchen zu dem durchströmungsporösen Formkörper (6) zusammenhält,
**dadurch gekennzeichnet,**
**dass** Blähtonteilchen als anorganische Feststoffteilchen mit inneren Leerräumen vorgesehen sind;
**dass** der Formkörper (6) als weitere Komponente Talkum als Mittel zum Erhöhen der Geschmeidigkeit der Masse für den rohen Formkörper enthält; und
und **dass** an der Zuströmoberfläche des Filterelements eine Oberflächenfiltrationsschicht (18) vorgesehen ist, die eine kleinere Porengröße als das Filterelement unterhalb der Oberflächenfiltrationsschicht (18) hat.

2. Filterelement nach Anspruch 1,
**dadurch gekennzeichnet, dass** die Feststoffteilchen zum größten Teil eine Größe in den Grenzen 0,2 bis 1 mm, vorzugsweise 0,3 bis 0,7 mm, haben.

3. Filterelement nach Anspruch 1 oder 2,
**dadurch gekennzeichnet, dass** der Binder Natronwasserglas, Kaliumwasserglas, Lithiumwasserglas oder eine Mischung aus mindestens zwei der genannten Wassergläser ist.

4. Filterelement nach einem der Ansprüche 1 bis 3,
**dadurch gekennzeichnet, dass** der Binder durch Kontaktieren des rohen Formkörpers (6) mit einer Härtungsflüssigkeit auf Alkoholbasis gehärtet ist.

5. Filterelement nach Anspruch 4,
**dadurch gekennzeichnet, dass** eine Härtungsflüssigkeit auf der Basis eines oder mehrerer einwertiger Alkohole vorgesehen ist.

6. Filterelement nach Anspruch 5,
**dadurch gekennzeichnet, dass** Äthanol, Methanol, Isopropanol, Brennspiritus oder eine Mischung aus mehreren dieser Stoffe vorgesehen ist.

7. Filterelement nach einem der Ansprüche 1 bis 6,
**dadurch gekennzeichnet, dass** das Filterelement außerdem, einzeln oder in Kombination mehrerer, enthält:
- einen oder mehrere Füllstoffe zusätzlich zu Talkum, vorzugsweise Quarzmehl;
- einen oder mehrere Hilfsstoffe oder Additive;
- Fasern zur Festigkeitserhöhung, vorzugsweise Glasfasern.

8. Filterelement nach einem der Ansprüche 1 bis 7,
**dadurch gekennzeichnet, dass** die folgenden Komponenten in folgenden Gewichtsprozent-Bereichen, bezogen auf das Gewicht des rohen Formkörpers (6), vorhanden sind:
| | |
|---|---|
| 10 bis 50 % | Wasserglas |
| 0 bis 5 % | Füllstoff oder Füllstoffe, einschließlich Talkum |
| 0 bis 5 % | Hilfsstoffe und/oder Additive |
| 0 bis 5 % | Fasern |
| 35 bis 90 % | Feststoffteilchen (als Rest) |

9. Filterelement nach einem der Ansprüche 1 bis 8,
**dadurch gekennzeichnet, dass** es ein Fasergelege (16), vorzugsweise eine Glasfasergewebematte, zur Festigkeitserhöhung enthält.

10. Filterelement nach einem der Ansprüche 1 bis 9,
**dadurch gekennzeichnet, dass** es einen inneren Hohlraum (10) aufweist.

11. Filterelement nach einem der Ansprüche 1 bis 10,
**dadurch gekennzeichnet, dass** der Formkörper aus zwei separat hergestellten und danach miteinander verbundenen Formkörper-Hälften (6') besteht.

12. Filterelement nach einem der Ansprüche 1 bis 11,
**dadurch gekennzeichnet, dass** eine mit Fasern, vorzugsweise Glasfasern, aufgebaute Oberflächenfiltrationsschicht (18) vorgesehen ist.

## Claims

1. Dimensionally stable, flow-porous filter element, suitable for filtering hot fluid, the filter element comprising a dimensionally stable, flow-porous molding (86) that comprises following components:
- inorganic solid particles with inner voids, and
- hardened binder on a water glass base,
- the binder holding together the solid particles to form the flow-porous molding (6)
**characterized in**
**that** foam clay particles are provided as inorganic solid particles with inner voids;
**that** the molding (6) comprises, as a further component, talc as means for increasing the pliability of the material for the raw molding;
and **that** a surface filtration layer (18) is provided on an afflux surface of the filter element, the surface filtration layer (18) having a smaller pare size than the filter element below the surface filtration layer (18).

2. Filter element according to claim 1,
**characterized in that** the solid particles have for the most part a size within the limits of 0.2 to 1 mm, preferably 0.3 to 0.7 mm.

3. Filter element according to claim 1 or 2,
**characterized in that** the binder is soda water glass, potassium water glass, lithium water glass or a mixture of at least two of said water glasses.

4. Filter element according to any of claims 1 to 3,
**characterized in that** the binder has been hardened by contacting the raw molding (6) with a hardening fluid on an alcohol base.

5. Filter element according to claim 4,
**characterized in that** a hardening fluid on the base of one or more monohydric alcohols is provided.

6. Filter element according to claim 5,
**characterized in that** ethanol, methanol, isopropanol, methylated spirit or a mixture of several of said substances is provided.

7. Filter element according to any of claims 1 to 6,
**characterized in that** the filter element furthermore contains, singly or in combination:
- one or more fillers in addition to talc, preferably quartz power;
- one or more auxiliary agents or additives;
- fibers for increasing strengths, preferably glass fibers.

8. Filter element according to any of claims 1 to 7,
**characterized in that** the following components are present in the following weight percent ranges, based on the weight of the raw molding (6):
| | |
|---|---|
| 10 to 50% | water glass |
| 0 to 5% | filler or fillers, including talc |
| 0 to 5% | auxiliary agents and/or additives |
| 0 to 5% | fibers |
| 35 to 90% | solid particles (as the balance). |

9. Filter element according to any of claims 1 to 8,
**characterized in that** it contains a fibrous mat (16), preferably a glass fiber mat, for increasing strength.

10. Filter element according to any of claims 1 to 9,
characerized by an inner cavity (10).

11. Filter element according to any of claims 1 to 10,
**characterized in that** the molding consists of two separately produces and subsequently interconnected molding halves (6').

12. Filter element according to anyone of claims 1 to 11,
characerized in that the surface filtration layer (18) is made using fibers, preferably glass fibers.

## Revendications

1. Elément filtrant, de forme stable et poreux à l'écoulement, qui est approprié pour filtrer des fluides chauds,
l'élément filtrant contenant un corps conformé (86) de forme stable et poreux à l'écoulement, qui présente les composants suivants :
- des particules solides inorganiques avec espaces vides intérieurs, et
- un liant durci à base de verre soluble,
- le liant maintenant les particules solides pour former le corps conformé (6) poreux à l'écoulement,
**caractérisé en ce que**
des particules d'argile expansé sont prévues à titre de particules solides inorganiques avec des espaces vides intérieurs ;
le corps conformé (6) contient comme autre composant du talc servant à augmenter l'élasticité de la masse pour le corps conformé brut ; et
sur la surface d'afflux de l'élément filtrant est prévue une couche de filtration de surface (18) qui a une grosseur de pores inférieure à l'élément filtrant au-dessous de la couche de filtration de surface (18).

2. Elément filtrant selon la revendication 1, **caractérisé en ce que** les particules solides ont la plupart une taille allant de 0,2 à 1 mm, de préférence de 0,3 à 0,7 mm.

3. Elément filtrant selon l'une ou l'autre des revendications 1 et 2, **caractérisé en ce que** le liant est du silicate de soude, du silicate de potassium, du silicate de lithium ou un mélange d'au moins deux des verres solubles cités.

4. Elément filtrant selon l'une des revendications 1 à 3, **caractérisé en ce que** le liant est durci par la mise en contact du corps conformé brut (6) avec un liquide de durcissement à base d'alcool.

5. Elément filtrant selon la revendication 4, **caractérisé en ce qu'**il est prévu un liquide de durcissement à base d'un ou plusieurs alcools monovalents.

6. Elément filtrant selon la revendication 5, **caractérisé en ce qu'**il est prévu de l'éthanol, du méthanol, de l'isopropanol, de l'alcool à brûler ou un mélange de plusieurs de ces substances.

7. Elément filtrant selon l'une des revendications 1 à 6, **caractérisé en ce que** l'élément filtrant contient en outre, individuellement ou en combinaison de plusieurs substances :
- une ou plusieurs matières de charge additionnelle ment au talc, de préférence de la poudre de quartz ;
- un ou plusieurs agents secondaires ou additifs ;
- des fibres augmentant la solidité, de préférence des fibres de verre.

8. Elément filtrant selon l'une des revendications 1 à 7, **caractérisé en ce que** les composants suivants sont en présence dans les plages de pourcentage suivantes, par rapport au poids du corps conformé brut (6):
10 à 50 % de verre soluble,
0 à 5 % de matière(s) de charge, y compris le talc,
0 à 5 % d'agents secondaires et/ou d'additifs,
0 à 5 % de fibres,
35 à 90 % de particules solides (en tant que reste).

9. Elément filtrant selon l'une des revendications 1 à 8, **caractérisé en ce qu'**il contient des fibres non tissées (16), de préférence une natte de tissu en fibres de verre pour augmenter la solidité.

10. Elément filtrant selon l'une des revendications 1 à 9, **caractérisé en ce qu'**il présente une cavité (10) intérieure.

11. Elément filtrant selon l'une des revendications 1 à 10, **caractérisé en ce que** le corps conformé est formé par deux moitiés (6') de corps conformé, fabriquées séparément et reliées ensuite l'une à l'autre.

12. Elément filtrant selon l'une des revendications 1 à 11, **caractérisé en ce qu'**il est prévu une couche de filtration de surface (18) constituée par des fibres, de préférence par des fibres de verre.
